# EUROPEAN PATENT APPLICATION

(11) **EP 4 102 609 A1**
(43) Date of publication of application: **14.12.2022**
(21) Application number: 20922559.8
(22) Date of filing: 04.03.2020
(51) Int. Cl.: H01M 10/0525

(54) **ELECTROCHEMICAL DEVICE AND ELECTRONIC DEVICE COMPRISING SAME**

(71) Applicant: Ningde Amperex Technology Limited, Ningde, Fujian 352100 (CN); Dongguan Amperex Technology Limited, Dongguan City, Guangdong Province 523000 (CN)
(72) Inventor: ZHONG, Huawei, Ningde, Fujian 352100 (CN)
(74) Representative: Icosa
(86) International application number: PCT/CN2020/077769
(87) International publication number: WO 2021/174443

(57) **Abstract**

This application relates to an electrochemical device and an electronic device containing same. The electrochemical device includes: a positive electrode, a negative electrode, a separator, an adhesive layer, and a lithium compound layer. The negative electrode includes a negative active material layer. The separator is disposed between the positive electrode and the negative electrode. The adhesive layer is disposed between the negative active material layer and the separator. The lithium compound layer is disposed between the adhesive layer and the negative active material layer. The lithium compound layer includes at least one of lithium carbonate or lithium oxide. In this application, the adhesive layer is disposed between the separator and the negative electrode to effectively enhance the adhesive ability of the negative electrode to the separator after a lithium supplement process, alleviate deformation of the negative electrode due to volume expansion during charge-and-discharge cycles, and avoid detachment from the separator.

## Description

### TECHNICAL FIELD

This application relates to the technical field of energy storage, and in particular, to an electrochemical device and an electronic device containing the electrochemical device.

### BACKGROUND

With rapid development of mobile electronic technologies, people are using a mobile electronic device such as a mobile phone, a tablet computer, a notebook computer, and an unmanned aerial vehicle more often and people's experience requirements are increasingly higher. Therefore, an electrochemical device (such as a lithium-ion battery) that provides energy for the electronic device needs to provide a higher energy density, a higher C-rate, higher safety, and less fading of capacity that occurs after repeated charge and discharge processes.

The energy density and cycle performance of the electrochemical device are closely related to a positive active material and a negative active material. In view of this, people keep researching and improving the negative active material in pursuit of a negative active material of a higher energy density. However, negative active materials of a higher energy density (such as a silicon-based material) are generally not compatible with existing electrode assembly structures and give rise to problems such as an insufficient electrical conductivity, an excessive expansion rate under heat, and insufficient processing performance. Therefore, currently, it is an urgent research topic to improve and optimize an electrode assembly structure (for example, a negative electrode, a separator, and a positive electrode) of the electrochemical device that uses a material of a higher energy density as a negative active material.

This application provides an electrochemical device and an electronic device that includes the electrochemical device in an attempt to solve at least one problem in the related art to at least some extent.

According to an aspect of this application, this application provides an electrochemical device, including: a positive electrode, a negative electrode, a separator, an adhesive layer, and a lithium compound layer. The negative electrode includes a negative active material layer. The separator is disposed between the positive electrode and the negative electrode. The adhesive layer is disposed between the negative active material layer and the separator. The lithium compound layer is disposed between the adhesive layer and the negative active material layer. The lithium compound layer includes at least one of lithium carbonate or lithium oxide.

According and another aspect of this application, this application provides an electronic device. The electronic device includes the electrochemical device.

After undergoing a lithium supplement process, the electrochemical device according to this application further includes a lithium compound layer formed on the surface of the negative active material layer. The adhesive layer disposed between the lithium compound layer and the separator effectively enhances an adhesive force between the negative electrode and the separator. After the electrochemical device undergoes a plurality of charge-and-discharge cycles, a sufficient adhesive force is still maintained between the negative electrode and the separator, thereby improving the cycle performance and safety performance of the electrochemical device.

Additional aspects and advantages of the embodiments of this application will be partly described or illustrated later herein or expounded through implementation of the embodiments of this application.

### BRIEF DESCRIPTION OF DRAWINGS

For ease of describing the embodiments of this application, the following outlines the drawings needed for describing the embodiments of this application or the prior art. Evidently, the drawings outlined below are merely a part of embodiments in this application. Without making any creative efforts, a person skilled in the art can still derive the drawings of other embodiments according to the structures illustrated in these drawings.
FIG. 1 is a schematic structural diagram of an electrode assembly of an electrochemical device according to some embodiments of this application;
FIG. 2 shows a 50× scanning electron microscopy image of a surface of a negative electrode that is not subjected to a lithium supplement process;
FIG. 3 shows a 400× scanning electron microscopy image of a surface of a negative electrode that is not subjected to a lithium supplement process;
FIG. 4 shows a 50× scanning electron microscopy image of a surface of a negative electrode subjected to a lithium supplement process; and
FIG. 5 shows a 400× scanning electron microscopy image of a surface of a negative electrode subjected to a lithium supplement process.

### DETAILED DESCRIPTION OF EMBODIMENTS

Embodiments of this application will be described in detail below. Throughout the specification of this application, the same or similar components and the components having the same or similar functions are denoted by similar reference numerals. The embodiments described herein with reference to the drawings are illustrative and graphical in nature, and are intended to enable a basic understanding of this application. The embodiments of this application are not to be construed as a limitation on this application.

In this specification, unless otherwise specified or defined, relativity terms such as "central", "longitudinal", "lateral", "front", "rear", "right" "," "left", "internal", "external", "lower", "higher", "horizontal", "perpendicular", "higher than", "lower than", "above", "under", "top", "bottom", and derivative terms thereof (such as "horizontally", "downwardly", "upwardly") shall be interpreted as a direction described in the context or a direction illustrated in the drawings. Such relative terms are merely used for ease of description, but not intended to require a construction or operation in this application to be performed in a given direction.

In addition, a quantity, a ratio, or another numerical value herein is sometimes expressed in the format of a range. Understandably, such a range format is for convenience and brevity, and shall be flexibly understood to include not only the numerical values explicitly specified and defined in the range, but also all individual numerical values or sub-ranges covered in the range as if each individual numerical value and each sub-range were explicitly specified.

In the embodiments and claims, a list of items referred to by using the terms such as "at least one of", "at least one thereof", "at least one type of" or other similar terms may mean any combination of the listed items. For example, if items A and B are listed, the phrases "at least one of A and B" and "at least one of A or B" mean: A alone; B alone; or both A and B. In another example, if items A, B, and C are listed, the phrases "at least one of A, B, and C" and "at least one of A, B, or C" mean: A alone; B alone; C alone; A and B (excluding C); A and C (excluding B); B and C (excluding A); or all of A, B, and C. The item A may include a single element or a plurality of elements. The item B may include a single element or a plurality of elements. The item C may include a single element or a plurality of elements.

Unless otherwise expressly specified, the following terms used herein have the meanings defined below.

The term "Cₓ" represents carbon atoms that are x in number. For example, a C₁ to C₁₀ alkyl is an alkyl group containing 1 to 10 carbon atoms.

The term "hydrocarbyl" covers an alkyl, alkenyl, alkynyl, cycloalkyl, and aryl. For example, a hydrocarbyl is intended to be a linear hydrocarbon structure containing 1 to 20 carbon atoms. "Hydrocarbyl" is also intended to be a branched or cyclic hydrocarbon structure containing 3 to 20 carbon atoms. A hydrocarbyl containing a specified quantity of carbon atoms is intended to cover all geometric isomers that each contain such quantity of carbon atoms. Further, the hydrocarbyl herein may be a C₁ to C₁₅ hydrocarbyl, a C₁ to C₁₀ hydrocarbyl, a C₁ to C₅ hydrocarbyl, a C₅ to C₂₀ hydrocarbyl, a C₅ to C₁₅ hydrocarbyl, or a C₅ to C₁₀ hydrocarbyl. In addition, the hydrocarbyl may be optionally substituted. For example, the hydrocarbyl may be substituted by halogen including fluorine, chlorine, bromine, and iodine, or by alkyl, aryl, or heteroaryl.

The term "hydroxyl" means an -OH group.

The term "amino" means a base formed of one nitrogen atom and two hydrogen atoms, and represents an -NH2 group.

The term "carboxyl" is a functional group of carboxylic acid, and represents a -C(O)-OH group.

The term "hydrocarbyloxyl" means an L-O- group, in which L is alkyl, alkenyl, alkynyl, cycloalkyl, or aryl. For example, when the L group is an alkyl, "hydrocarbyloxyl" may be referred to as "alkoxyl"; and, when the L group is a methyl, "hydrocarbyloxyl" may be referred to as "methoxyl". Further, the hydrocarbyloxyl herein may be a C₁ to C₂₀ hydrocarbyloxyl, a C₁ to C₁₅ hydrocarbyloxyl, a C₁ to C₁₀ hydrocarbyloxyl, a C₁ to C₅ hydrocarbyloxyl, a C₅ to C₂₀ hydrocarbyloxyl, a C₅ to C₁₅ hydrocarbyloxyl, or a C₅ to C₁₀ hydrocarbyloxyl.

The term "ester group" is a functional group of ester in a carboxylic acid derivative, and represents a -C(O)-O-R group, in which R covers an alkyl, alkenyl, alkynyl, cycloalkyl, and aryl. For example, the ester group is intended to be a linear, branched, or cyclic structure containing 1 to 200 carbon atoms. Further, the "ester group" is intended to be a C₂ to C₁₀ ester group. An ester group containing a specified quantity of carbon atoms is intended to cover all geometric isomers that each contain such quantity of carbon atoms. Further, the ester group herein may be a C₁ to C₁₅ ester group, a C₁ to C₁₀ ester group, a C₁ to C₅ ester group, a C₅ to C₂₀ ester group, a C₅ to C₁₅ ester group, or a C₅ to C₁₀ ester group.

The term "alkyl" is intended to be a linear saturated hydrocarbon structure containing 1 to 20 carbon atoms. "Alkyl" is also intended to be a branched or cyclic hydrocarbon structure possessing 3 to 20 carbon atoms. For example, the alkyl may be a C₁ to C₂₀ alkyl, a C₁ to C₁₀ alkyl, a C₁ to C₅ alkyl, a C₅ to C₂₀ alkyl, a C₅ to C₁₅ alkyl, or a C₅ to C₁₀ alkyl. An alkyl containing a specified quantity of carbon atoms is intended to cover all geometric isomers containing the specified quantity of carbon atoms. Therefore, for example, "butyl" is intended to include n-butyl, sec-butyl, isobutyl, tert-butyl, and cyclobutyl; and "propyl" includes n-propyl, isopropyl, and cyclopropyl. Examples of alkyl include, but are not limited to, methyl, ethyl, n-propyl, isopropyl, cyclopropyl, n-butyl, isobutyl, sec-butyl, tert-butyl, cyclobutyl, n-pentyl, isopentyl, neopentyl, cyclopentyl, methylcyclopentyl, ethylcyclopentyl, n-hexyl, isohexyl, cyclohexyl, n-heptyl, octyl, cyclopropyl, cyclobutyl, norbornyl, and the like. In addition, the alkyl may be optionally substituted.

The term "alkenyl" means a linear or branched monovalent unsaturated hydrocarbon group containing at least one carbon-carbon double bond, and typically, 1, 2, or 3 carbon-carbon double bonds. Unless otherwise defined, an alkenyl typically contains 2 to 20 carbon atoms, and may be, for example, a C₂ to C₂₀ alkenyl, a C₆ to C₂₀ alkenyl, a C₂ to C₁₂ alkenyl, or a C₂ to C₆ alkenyl. Representative alkenyls include, for example, vinyl, n-propenyl, isopropenyl, n-but-2-enyl, but-3-enyl, n-hex-3-enyl, and the like. In addition, the alkenyl may be optionally substituted.

The term "alkynyl" means a linear or branched monovalent unsaturated hydrocarbon group containing at least one carbon-carbon triple bond, and typically, 1, 2, or 3 carbon-carbon triple bonds. Unless otherwise defined, an alkynyl typically contains 2 to 20 carbon atoms, and may be, for example, a C₂ to C₂₀ alkynyl, a C₆ to C₂₀ alkynyl, a C₂ to C₁₀ alkynyl, or a C₂ to C₆ alkynyl. Representative alkynyls include, for example, ethynyl, prop-2-ynyl (n-propynyl), n-but-2-ynyl, n-hex-3-ynyl, and the like. In addition, the alkynyl may be optionally substituted.

The term "acyl" means an atomic group that remains after the hydroxyl (-OH group) is removed from organic or inorganic oxoacid, and represents an R-M(O)-group, in which M is a carbon atom, R is an alkyl, alkenyl, alkynyl, cycloalkyl, aryl or another commonly seen substituent. For example, when R is amino, "acyl" is "amido".

The term "aryl" covers a monocyclic system and a polycyclic system. "Polycyclic" means two or more rings, in which two adjacent rings (the rings are "condensed") share two carbon atoms. Among the rings, at least one ring is aromatic, and other rings may be, for example, a cycloalkyl, cycloalkenyl, aryl, or a heterocyclic and/or heteroaryl. For example, the aryl may be a C₆ to C₅₀ aryl, a C₆ to C₄₀ aryl, a C₆ to C₃₀ aryl, a C₆ to C₂₀ aryl, or a C₆ to C₁₀ aryl. Representative aryls include (for example), phenyl, methylphenyl, propylphenyl, isopropylphenyl, benzyl, naphth-1-yl, naphth-2-yl, and the like. In addition, the aryl may be optionally substituted.

The term "heterocyclyl" covers aromatic and non-aromatic cyclic groups. A heteroaromatic cyclic group also means an aromatic hetero group. In some embodiments, a heteroaromatic cyclic group and a hetero-non-aromatic cyclic group are a C₁ to C₅₀ heterocyclyl, C₁ to C₄₀ heterocyclyl, C₁ to C₃₀ heterocyclyl, C₁ to C₂₀ heterocyclyl, C₁ to C₁₀ heterocyclyl, or C₁ to C₆ heterocyclyl, which, in each case, contains at least one heteroatom. Representative heterocyclyls include, for example, morpholinyl, piperidinyl, pyrrolidinyl, and the like, as well as cyclic ethers, such as tetrahydrofuran, tetrahydropyran, and the like. In addition, the heterocyclyl may be optionally substituted.

The term "heteroaryl" covers monocyclic heteroaromatic groups that each may contain one to three heteroatoms, for example, pyrrole, furan, thiophene, imidazole, oxazole, thiazole, triazole, pyrazole, pyridine, pyrazine, and pyrimidine. The term "heteroaryl" further includes a polycyclic heteroaromatic system containing two or more rings, in which two adjacent rings (the rings are "condensed") share two carbon atoms. Among the rings, at least one ring is a heteroaryl, and other rings may be a cycloalkyl, cycloalkenyl, aryl, or a heterocyclic and/or heteroaryl. For example, the heteroaryl may be a C₆ to C₅₀ heteroaryl, a C₆ to C₄₀ heteroaryl, a C₆ to C₃₀ heteroaryl, a C₆ to C₂₀ heteroaryl, or a C₆ to C₁₀ heteroaryl. In addition, the heteroaryl may be optionally substituted.

The term "halogen" herein may be F, Cl, Br, or I.

The term "cyano" herein covers an organic functional group that contains - CN.

The term "fraction of coverage" herein means the degree of coverage of a coating layer on a surface of a coated object. For example, a fraction of coverage being 100% means that the coating layer covers the full area of the surface of the coated object. The fraction of coverage being 40% means that the coating layer covers just 40% of the area of the surface of the coated object, but exposes the remaining 60% of the area of the surface of the coated object.

The term "degree of substitution" means an average number of groups substituted by the substituent in a single monomer on the main chain of the polymer. For example, the degree of substitution being 0.5 means that averagely 0.5 substituent group exists in a single monomer of the polymer.

The term "particle size" herein is represented by Dᵥ₅₀ that is obtained in a laser particle size test and that denotes particle characteristics of a sample material. Dᵥ₅₀ is a particle diameter of the sample material measured when the cumulative volume percentage of the measured particles calculated from a small-diameter side reaches 50% of the total volume of the sample particles in a volume-based particle size distribution.

In the field of electrochemical devices, in order to pursue a higher energy density, attempts have been made to replace graphite in the conventional negative active material with a negative active material of a higher energy density. However, in applying such a negative active material of a higher energy density, the negative active material needs to be further processed due to different material properties. For example, silicon-based materials are mainstream negative active materials to be developed in the future for electrochemical devices (such as a lithium-ion battery) with a higher volumetric energy density by virtue of a theoretical gram capacity as high as 4200 mAh/g. However, a first-cycle Coulombic efficiency of the silicon-based materials is low, bottlenecking further increase of the volumetric energy density of the lithium-ion battery. Therefore, the first-cycle Coulombic efficiency of the silicon-based materials needs to be improved by a lithium supplement process, so that the volumetric energy density of the lithium-ion battery can be increased effectively. The lithium supplement process is a method for supplementing the negative active material with lithium to increase the energy density. For example, a relatively mature lithium supplement process is to compound a given amount of lithium metal with the surface of the negative active material layer and roll-compact the surface. After an electrolytic solution is injected into the lithium-ion battery, the metal lithium can quickly react with the negative active material and be intercalated in the negative active material, thereby improving the first-cycle Coulombic efficiency of the negative active material.

Such a negative active material of a higher energy density incurs a huge volume change effect (for example, by more than 300%) in lithiation and delithiation processes. Severe expansion of a negative electrode may cause deformation of an interface between the negative electrode and the separator or even cause detachment of the separator, thereby deteriorating cycle performance of the lithium-ion battery. In addition, limited by the preparation process for the negative electrode subjected to the lithium supplement process, lithium metal is prone to side reaction with moisture and oxygen in the air to form a lithium compound layer on the surface of the negative active material layer. The adhesive force between the lithium compound layer and the conventional coating on the surface of the separator is very weak (for example, less than 1 N/m), resulting in weak bonding or no bonding between the negative electrode and the separator. Therefore, if weak bonding or no bonding exists between the coating of the separator and the surface of a silicon negative electrode, the excessive volume expansion during the charge-and-discharge cycles will not only cause deformation of the electrode assembly to deteriorate the cycle performance, but also be prone to disrupt the structure of the lithium-ion battery and severely impair the safety performance of lithium-ion batteries.

With a view to mitigating the expansion of the negative electrode, this application studies how to suppress the expansion of the negative electrode during charging by increasing interfacial adhesion between the separator and the negative electrode. In this application, an adhesive layer is disposed between the negative electrode and the separator, and the adhesive force of the adhesive layer to the lithium compound layer is increased by controlling the lithium compound layer generated by the lithium supplement process, thereby effectively increasing the adhesive force of the separator to the negative electrode, reducing the volume expansion rate of the negative electrode during the charge-and-discharge cycles, and helping to alleviate the deformation of the electrode assembly. In this application, the adhesive layer is applicable to an electrochemical device that adopt a negative active material of a higher energy density, so as to improve the cycle stability and safety of the electrochemical device. In addition, due to suppression of expansion and deformation, the interface between the negative electrode and the separator is steadier, thereby increasing the cycle capacity retention rate.

According to an aspect of this application, an embodiment of this application provides an adhesive layer disposed between the negative electrode and the separator. The adhesive layer exerts a sufficient adhesive force on a lithium compound layer in a negative electrode subjected to lithium supplementation. Therefore, the electrochemical device can ensure relatively high cycle performance and safety performance by adding the adhesive layer between the lithium compound layer and the separator.

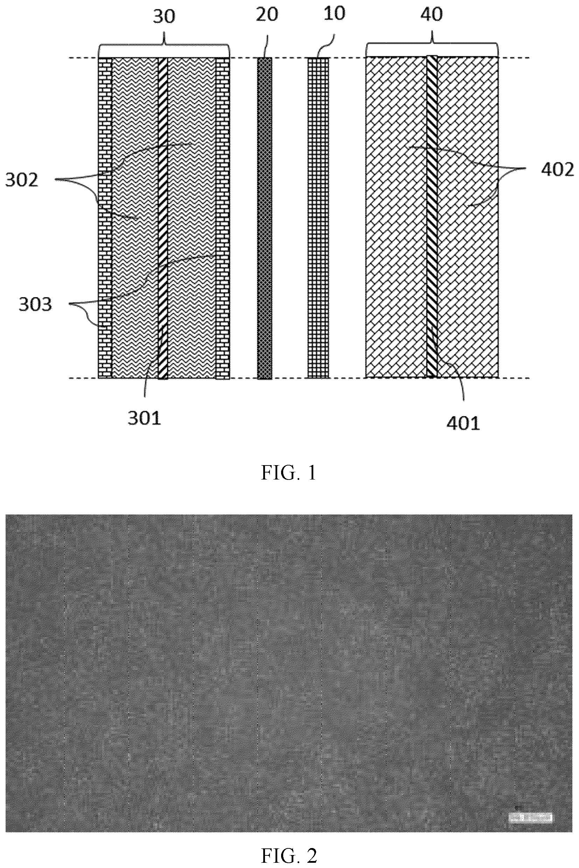

FIG. 1 is a schematic structural diagram of an electrode assembly of an electrochemical device according to some embodiments of this application.

As shown in FIG. 1, the electrochemical device according to this application includes: a positive electrode 40, a negative electrode 30, a separator 10, and an adhesive layer 20. The negative electrode 30 includes a negative active material layer 302. The separator 10 is disposed between the positive electrode 40 and the negative electrode 30. The adhesive layer 20 is disposed between the negative active material layer 302 and the separator 10. The negative electrode of the electrochemical device is subjected to a lithium supplement process, and a lithium compound layer 303 is formed on the negative active material layer 302. The lithium compound layer 303 is disposed between the adhesive layer 20 and the negative active material layer 302. In some embodiments, the lithium compound layer 303 includes at least one of lithium carbonate or lithium oxide.

In some embodiments, the lithium compound layer 303 is in contact with the negative active material layer 302, and the lithium compound layer 303 is in contact with the adhesive layer 20.

The term "layer" herein is used to describe a layered structure of each functional material in the electrochemical device, for example, an adhesive layer, a negative active material layer, a positive active material layer, and a lithium compound layer. In a specific embodiment, the layered structure may be, but without being limited to, a continuous, discontinuous, or through-hole-containing layered structure, or a layered structure formed of a plurality of particles. For example, a continuous layered structure is a complete layer with no gaps in the layer; and a discontinuous layered structure is a layer containing a plurality of interspersed or segmental parts between which a fracture surface or gap exists.

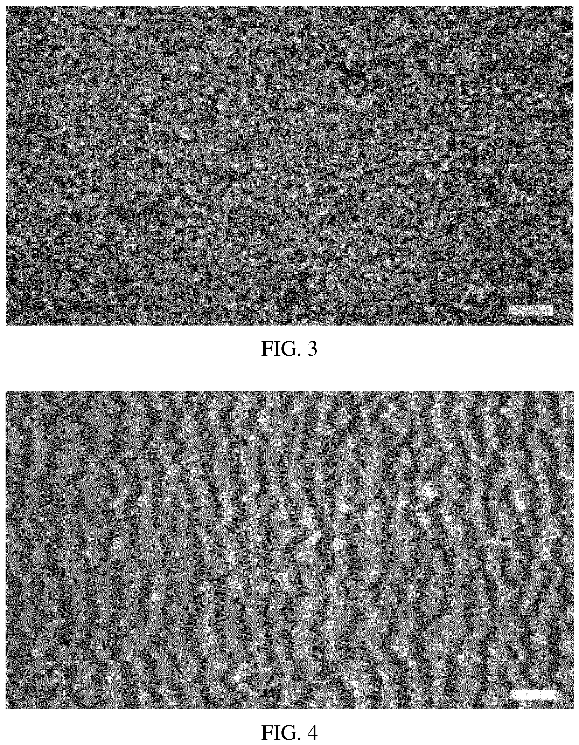

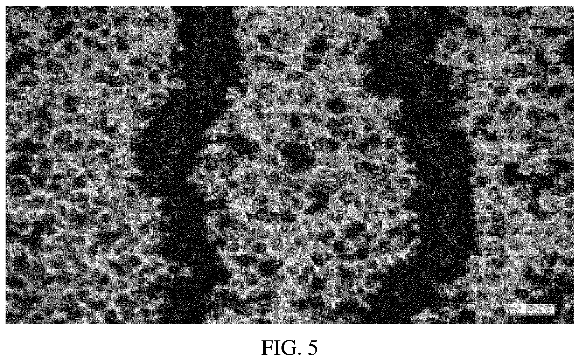

FIG. 2 and FIG. 3 show a 50× and 400×, respectively, scanning electron microscopy image of a surface of a negative electrode that is not subjected to a lithium supplement process. FIG. 4 and FIG. 5 show a 50× and 400×, respectively, scanning electron microscopy image of a surface of a negative electrode subjected to a lithium supplement process.

As shown in FIG. 2 to FIG. 5, the lithium compound layer exhibits a bumpy and vertically grained morphology in comparison with the negative electrode that is not subjected to lithium supplementation. The negative active material layer overlaid with the lithium compound layer increases a vertical deviation value between the exposed part of the negative active material layer and the surface formed by the part overlaid with the lithium compound layer, thereby increasing roughness of a surface of the negative electrode, where the surface is oriented toward the separator. In addition, due to a relatively high porosity of the lithium compound layer, the porosity of the negative electrode subjected to the lithium supplement process increases, thereby further increasing the surface roughness of the negative electrode.

Understandably, the distribution, shape, and fraction of coverage of the lithium compound layer on the negative active material layer can be controlled by the setting of lithium metal in the lithium supplement process. For example, as shown in FIG. 4 and FIG. 5, lithium metal strips of fixed length and width are used in the lithium supplement process, and are interspaced at fixed intervals, so that the formed lithium compound layer is distributed in stripes on the negative active material layer. In some embodiments, the shape of the lithium compound layer is planar, striped, speckled, irregular, or the like. In some embodiments, the lithium compound layer is striped.

In some embodiments, the fraction of coverage of the lithium compound layer on the negative active material layer is greater than or equal to 30%. In other embodiments, the fraction of coverage of the lithium compound layer on the negative active material layer is approximately 40%, 50%, 60%, 70%, 80%, 90%, or 100%, for example.

In some embodiments, the porosity of the negative active material layer and the lithium compound layer is 10% to 60%. In other embodiments, the porosity of the negative active material layer and the lithium compound layer is approximately 10%, 15%, 20%, 30%, 40%, 50%, 60%, or a range formed by any two thereof, for example.

In some embodiments, the surface roughness of the negative electrode is 0.5 µm to 4.0 µm. In other embodiments, the surface roughness of the negative electrode is approximately 0.5 µm, 1.0 µm, 1.5 µm, 2.0 µm, 2.5 µm, 3.0 µm, 3.5 µm, 4.0 µm, or a range formed by any two thereof, for example.

By adjusting the porosity of the negative active material layer and the lithium compound layer as well as the surface roughness of the negative electrode, the contact area between the adhesive layer and the negative electrode can be further controlled, so that the polymer particles in the adhesive layer can be intercalated into the surface of the negative electrode, so as to form a "riveted" state and increase the mutual acting force.

In some embodiments, the thickness of the lithium compound layer is 0.01 µm to 3 µm.

In some embodiments, the polymer is a modified polypropylene structure polymer, and the polymer includes a main chain and a substituent.

In some embodiments, the main chain of the polymer is formed of at least one of the following monomers: methyl propylene, methacrylic acid, methyl methacrylate, imide, vinyl alcohol, and ethylene glycol. In some embodiments, the main chain of the polymer is formed of at least one of the following monomers: methyl propylene, imide, vinyl alcohol, and ethylene glycol.

In some embodiments, the substituent of the polymer includes at least one of carboxyl, hydroxyl, amino, amido, methoxyl, cyano, or ester group. In some embodiments, the substituent of the polymer includes at least one of carboxyl, hydroxyl, or amino.

In some embodiments, the degree of substitution of the substituent in the polymer is 0.2 to 0.8.

In this embodiment of this application, on the one hand, a polymer with a substituent of a high electronegativity is selected. The higher the electronegativity, the greater the intermolecular force between the polymer in the adhesive layer and a bonded interface substance, and the higher the adhesive force of the adhesive layer. In some embodiments of this application, a dielectric constant of the polymer is 5 F/m to 50 F/m to achieve a great intermolecular force on the bonded interface substance.

In this embodiment of this application, on the other hand, a polymer formed of a specified main chain structure and a specified substituent is selected, so that the adhesive layer can be well infiltrated by the electrolytic solution to implement firm adhesion. Due to high electrochemical stability, ethylene carbonate can well dissolve typical lithium battery additives such as fluoroethylene carbonate (FEC), and is the most commonly used solvent system for the electrolytic solution. Therefore, a contact angle of the polymer in the adhesive layer to the ethylene carbonate can represent the degree of infiltrating the adhesive layer by the electrolytic solution. In some embodiments of this application, the contact angle of the polymer in the adhesive layer to the ethylene carbonate is 0° to 90°. In some embodiments of this application, the contact angle of the polymer to the ethylene carbonate is 10° to 50° to achieve a high degree of infiltration by the electrolytic solution.

In this embodiment of this application, on the other hand, a polymer with a specified substituent is selected to enhance structural stability of the polymer in an alkaline solution effectively. The adhesive layer is still adhesive to the negative electrode and the separator after a plurality of charge-and-discharge cycles, thereby increasing the cycle life of the electrochemical device. The structural stability of the polymer in the adhesive layer can be represented by a weight loss rate measured in an alkali resistance test. A higher weight loss rate represents a greater extent of peeling the substituent of the polymer from the adhesive layer, and represents a lower adhesive force and a lower structural stability of the adhesive layer. In some embodiments, the weight loss rate of the polymer after being soaked in the1 mol/L sodium hydroxide solution for 0.5 hour is less than 20%. In other embodiments, the weight loss rate of the polymer after being soaked in the 1 mol/L sodium hydroxide solution for 0.5 hour is less than or equal to 10%.

In some embodiments, the adhesive force of the adhesive layer to the lithium compound layer or the separator of the negative electrode can be greater than or equal to 10 N/m. In other embodiments, the adhesive force of the adhesive layer to the lithium compound layer or the separator of the negative electrode is 15 N/m. In other embodiments, the adhesive force of the adhesive layer to the lithium compound layer or the separator of the negative electrode is 20 N/m.

In some embodiments, the polymer is particles, and the particle size of the polymer is 0.01 µm to 20 µm. In other embodiments, the particle size of the polymer is approximately 0.01 µm, 0.05 µm, 0.1 µm, 0.5 µm, 1.0 µm, 5.0 µm, 10.0 µm, 20.0 µm, or a range formed by any two thereof, for example.

In some embodiments, a number-average molecular weight of the polymer is 1 kDa to 1000 kDa. In other embodiments, the number-average molecular weight of the polymer is approximately 1 kDa, 10 kDa, 100 kDa, 200 kDa, 400 kDa, 600 kDa, 800 kDa, 1000 kDa, or a range formed by any two thereof, for example.

In some embodiments, the adhesive layer further includes inorganic particles. The inorganic particles include at least one of SrTiO₃, SnO₂, CeO₂, MgO, NiO, CaO, ZnO, ZrO₂, Y₂O₃, Al₂O₃, TiO₂, Al(OH)₃, Mg(OH)₂, SiC, or boehmite. The mechanical strength of the adhesive layer can be increased by adding the inorganic particles into the adhesive layer. When the electrode assembly is overheated or thermal runaway during charge-and-discharge cycles, the adhesive layer of high mechanical strength can suppress safety accidents (such as short circuit and rupture) of the separator caused by thermal shrinkage.

In some embodiments, based on a total weight of the adhesive layer, a weight percent of inorganic particles is less than or equal to 50 wt%. In other embodiments, based on the total weight of the adhesive layer, the weight percent of inorganic particles is less than or equal to 30 wt%.

In some embodiments, the thickness of the adhesive layer is 0.1 µm to 10 µm. In other embodiments, the thickness of the adhesive layer is approximately 0.1 µm, 0.5 µm, 1 µm, 1.5 µm, 2 µm, 3 µm, 4 µm, 5 µm, 10 µm, or a range formed by any two thereof, for example.

In some embodiments, the porosity of the adhesive layer is 20% to 80%. In other embodiments, the porosity of the adhesive layer is approximately 20%, 30%, 40%, 50%, 60%, 70%, 80%, or a range formed by any two thereof, for example.

The thickness and the porosity range of the adhesive layer that are set according to this embodiment of this application ensure a sufficient contact area of the bonded interface, so as to ensure a sufficient adhesive force and prevent the adhesive layer from blocking the ion channel of the separator or the negative electrode, and in turn, maintain an appropriate ionic conductivity.

In some embodiments, the electrochemical device is a lithium-ion battery.

Referring to FIG. 1, in some embodiments, the positive electrode 40 includes a positive current collector 401, and the negative electrode 30 includes a negative current collector 301. The positive current collector 401 may be an aluminum foil or a nickel foil, and the negative current collector 301 may be a copper foil or a nickel foil. However, other positive current collectors and negative current collectors commonly used in the art may be used instead without limitation.

In some embodiments, the negative electrode 30 includes a negative active material layer 302. The negative active material layer 302 includes a negative active material. The negative active material includes at least one of: artificial graphite, natural graphite, mesocarbon microbead, hard carbon, soft carbon, lithium titanium oxide, single crystal silicon, amorphous silicon, a silicon-oxygen composite, or a silicon-carbon composite.

In other embodiments, the negative active material layer further includes a negative active material of a high energy density, Examples of the negative active material include, but are not limited to, at least one of a simple substance, alloy, or compound of silicon, tin, germanium, antimony, bismuth, and aluminum. In other embodiments, the negative active material includes at least one of silicon, a silicon-oxygen composite, or a silicon-carbon composite.

In some embodiments, the positive electrode 40 includes a positive active material layer 402. The positive active material layer 402 includes a positive active material capable of absorbing and releasing lithium (Li) (hereinafter sometimes referred to as "positive active material capable of absorbing/releasing lithium Li"). Examples of the positive active material capable of absorbing/releasing lithium (Li) may include one or more of lithium cobalt oxide, lithium nickel cobalt manganese oxide, lithium nickel cobalt aluminum oxide, lithium manganese oxide, lithium iron manganese phosphate, lithium vanadium phosphate, lithium vanadyl phosphate, lithium iron phosphate, lithium titanium oxide, and a lithium-rich manganese-based materials.

In the positive active material, the chemical formula of the lithium cobalt oxide may be Li_{y}CoₐM1_{b}O2_{-c}, where the element M1 is selected from at least one of nickel (Ni), manganese (Mn), magnesium (Mg), aluminum (Al), boron (B), titanium (Ti), vanadium (V), chromium (Cr), iron (Fe), copper (Cu), zinc (Zn), molybdenum (Mo), tin (Sn), calcium (Ca), strontium (Sr), tungsten (W), yttrium (Y), lanthanum (La), zirconium (Zr), and silicon (Si), and values of y, a, b, and c are in the following ranges: 0.8 ≤ y ≤ 1.2, 0.8 ≤ a ≤ 1,0≤ b ≤ 0.2, -0.1 ≤ c ≤ 0.2, respectively.

In the positive active material, the chemical formula of the lithium nickel cobalt manganese oxide or the lithium nickel cobalt aluminum oxide may be Li_{z}Ni_{d}M2ₑO_{2-f}, where the element M2 is selected from at least one of cobalt (Co), manganese (Mn), magnesium (Mg), aluminum (Al), boron (B), titanium (Ti), vanadium (V), chromium (Cr), iron (Fe), copper (Cu), zinc (Zn), molybdenum (Mo), tin (Sn), calcium (Ca), strontium (Sr), tungsten (W), Yttrium (Y), Lanthanum (La), zirconium (Zr), or silicon (Si), and values of z, d, e, and f fall in the following ranges: 0.8 ≤ z ≤ 1.2, 0.3 ≤ d ≤ 0.98, 0.02 ≤ e ≤ 0.7, -0.1 ≤ f ≤ 0.2, respectively.

Among the positive active materials, the chemical formula of lithium manganese oxide is LiᵤMn_{2-g}M3_{g}O₄₋ₕ, where the element M3 is selected from at least one of cobalt (Co), nickel (Ni), magnesium (Mg), aluminum (Al), boron (B), titanium (Ti), vanadium (V), chromium (Cr), iron (Fe), copper (Cu), zinc (Zn), molybdenum (Mo), tin (Sn), calcium (Ca), strontium (Sr), and tungsten (W), and values of z, g, and h are in the following ranges: 0.8 ≤ u ≤ 1.2, 0 ≤ g <1.0, and -0.2 ≤ h ≤ 0.2, respectively.

In some embodiments, the positive active material layer and the negative active material layer each can independently further include at least one of a binder or a conductive agent.

In some embodiments, the binder includes at least one of polyvinylidene fluoride, poly(vinylidene fluoride-co-hexafluoropropylene), polyamide, polyacrylonitrile, polyacrylate, polyacrylic acid, sodium polyacrylate, sodium carboxymethyl cellulose, polyvinylpyrrolidone, polyvinyl ether, poly methyl methacrylate, polytetrafluoroethylene, polyhexafluoropropylene, or styrene butadiene rubber. In some embodiments, the conductive agent includes at least one of carbon nanotubes, carbon fibers, conductive carbon black, acetylene black, graphene, or Ketjen black. Understandably, a person skilled in the art may select a conventional binder and a conventional conductive agent according actual requirements without limitation.

In some embodiments, the lithium compound layer includes neither a binder nor a conductive agent.

In some embodiments, the separator includes, but is not limited to, at least one of polyethylene, polypropylene, polyethylene terephthalate, polyimide, and aramid. For example, the polyethylene includes a component selected from at least one of highdensity polyethylene, low-density polyethylene, and ultra-high-molecular-weight polyethylene. Especially, the polyethylene and the polypropylene are highly effective in preventing short circuits, and can improve stability of the battery through a turn-off effect. In some embodiments, the separator is polypropylene. The polypropylene is of high affinity with the polymer described in the foregoing embodiment, and helps to increase the adhesive force between the adhesive layer and the separator.

The lithium-ion battery according to this application further includes an electrolyte. The electrolyte may be one or more of a gel electrolyte, a solid-state electrolyte, and an electrolytic solution. The electrolytic solution includes a lithium salt and a nonaqueous solvent.

In some embodiments, the lithium salt is at least one selected from LiPF₆, LiBF₄, LiAsF₆, LiClO₄, LiB(C₆H₅)₄, LiCH₃SO₃, LiCF₃SO₃, LiN(SO₂CF₃)₂, LiC(SO₂CF₃)₃, LiSiF6, LiBOB, and lithium difluoroborate. For example, the lithium salt is LiPF6 because it provides a high ionic conductivity and improves cycle characteristics.

The nonaqueous solvent may be a carbonate compound, a carboxylate compound, an ether compound, another organic solvent, or any combination thereof.

The carbonate compound may be a chain carbonate compound, a cyclic carbonate compound, a fluorocarbonate compound, or any combination thereof.

Examples of the other organic solvent are dimethyl sulfoxide, 1,2-dioxolane, sulfolane, methyl sulfolane, 1,3-dimethyl-2-imidazolidinone, N-methyl-2-pyrrolidone, formamide, dimethylformamide, acetonitrile, trimethyl phosphate, triethyl phosphate, trioctyl phosphate, phosphate ester, and any combination thereof.

In some embodiments, the nonaqueous solvent is selected from groups that each include ethylene carbonate, propylene carbonate, diethyl carbonate, dimethyl carbonate, ethyl methyl carbonate, propylene carbonate, methyl acetate, ethyl propionate, fluoroethylene carbonate, and any combination thereof.

Understandably, the method for preparing the positive electrode, the negative electrode, the separator, and the electrolyte in this embodiment of this application may be, but without being limited to, any appropriate conventional method in the art according to specific requirements to the extent of not departing from the spirit of this application.

In some embodiments, the method for preparing a lithium-ion battery according to this application includes the following steps:

Preparing an adhesive layer: Adding a polymer, an antioxidant (412S, by Tianjin Rianlon Corporation), an emulsifier (N-dodecyl dimethylamine) into a multiagitator high-speed dispersing reactor at a weight percent of 99%, 0.5%, and 0.5% respectively. Controlling the reaction temperature to be 80 °C to 160 °C. Vacuumizing until a pressure of -0.8 MPa to -0.5 MPa. Keeping reacting for 4 hours, and performing filtering to obtain a polymer slurry. Mixing the polymer slurry with the inorganic particles to form an adhesive layer slurry. Coating the separator with the adhesive layer slurry, and performing a drying process to obtain a separator overlaid with an adhesive layer.

Lithium supplement process for the negative electrode: Drying the negative electrode at a temperature of 85 °C for 24 hours in a drying room, and controlling the moisture content to be less than 300 ppm. Roll-compacting the lithium metal foil until it is several micrometers in thickness, and then compounding the lithium metal foil with the surface of the negative active material layer, and roll-compacting the compounded surface to form a lithium-supplemented negative electrode.

Assembling a lithium-ion battery: Arranging the positive electrode, the separator (the side coated with the adhesive layer is oriented toward the negative electrode), and the lithium-supplemented negative electrode in sequence; winding, folding, or stacking them to form an electrode assembly; putting the electrode assembly into a packaging bag, injecting an electrolytic solution, and then performing steps such as vacuum sealing, standing, formation, and shaping to obtain a lithium-ion battery.

Although a lithium-ion battery is used as an examples above, a person skilled in the art, by reading this application, understands that, specific examples of the electrochemical device according to this application include all types of primary batteries or secondary batteries to the extent of not departing from the spirit of this application. In particular, the electrochemical device is a lithium secondary battery, including a lithium metal secondary battery, a lithium-ion secondary battery, a lithium polymer secondary battery, or a lithium-ion polymer secondary battery.

Some embodiments of this application further provide an electronic device. The electronic device includes the electrochemical device according to embodiments of this application.

The electronic device according to the embodiments of this application is not particularly limited, and may be any electronic device known in the prior art. In some embodiments, the electronic device may include, but is not limited to, a notebook computer, a pen-inputting computer, a mobile computer, an e-book player, a portable phone, a portable fax machine, a portable photocopier, a portable printer, a stereo headset, a video recorder, a liquid crystal display television set, a handheld cleaner, a portable CD player, a mini CD-ROM, a transceiver, an electronic notepad, a calculator, a memory card, a portable voice recorder, a radio, a backup power supply, a motor, a car, a motorcycle, a power-assisted bicycle, a bicycle, a lighting appliance, a toy, a game console, a watch, a power tool, a flashlight, a camera, a large household battery, a lithium-ion capacitor, and the like.

### Embodiments

The following enumerates some specific embodiments and comparative embodiments, and performs a surface roughness test and a thickness test on the negative electrode, an adhesive force test on the negative electrode and the separator, and a capacity test and a cycle thickness expansion rate test on the electrochemical device (lithium-ion battery) separately to describe the technical solutions of this application more clearly.

### I. Test methods

### 1.1 Testing surface roughness and thickness:

Capturing a three-dimensional morphology image of a part of a surface region of a lithium compound layer of a lithium-ion battery by using a confocal laser scanning microscope (Olympus, LEXT 0LS3100), and obtaining a surface roughness and a thickness of the region through image analysis. Sampling different regions of the same test object to obtain an average of surface roughness values and thickness values.

### 1.2 Testing the battery capacity:

Leaving a chemically formed lithium-ion battery to stand in a 25±3 °C environment for 30 minutes, charging the battery at a constant current of 0.5 C rate until the voltage reaches 4.45 V, and then charging the battery at a constant voltage of 4.45 V until the current reaches 0.05 C, and leaving the lithium-ion battery under test to stand for 30 minutes. Subsequently, discharging the lithium-ion battery at a 0.2 C rate until the voltage reaches 3.0 V, and leaving the lithium-ion battery under test to stand for 30 minutes. Finally, using a discharge capacity measured at this time as an actual battery capacity of the lithium-ion battery. Volumetric energy density of lithium-ion battery = actual battery capacity/(length × width × thickness of lithium-ion battery).

### 1.3 Testing the adhesive force:

Disassembling a chemically formed lithium-ion battery and a 400^{th}-cycle-completed lithium-ion battery in a dry room environment by separating a positive electrode from a separator of the batteries. Leaving the batteries to stand for 5 minutes until an electrolytic solution of the batteries is evaporated to dryness. Cutting out a 150 mm × 20 mm sample of a stacked structure of the negative electrode, the adhesive layer, and the separator. Testing the interfacial adhesive force of the sample by pulling the sample at a tensile speed of 50 mm/min at a peel angle of 180° for a tensile displacement of 50 mm using a GoTech tensile strength testing machine (AL-3000). Testing the lithium-ion batteries in groups, with each group containing 4 batteries. Calculating an average of the adhesive forces between the negative electrode and the separator of the lithium-ion batteries.

### 1.4 Testing the cycle thickness expansion rate:

Measuring a thickness of a lithium-ion battery using a 600 g parallel plate gauge (Elastocon, EV 01). Putting the lithium-ion battery into a 25 °C±2 °C thermostat, leaving the battery to stand for 2 hours, charging the battery at a constant current of 0.7 C until the voltage reaches 4.45 V, and then charging the battery at a constant voltage of 4.45 V until the current reaches 0.05 C, and leaving the battery to stand for 15 minutes, and then discharging the battery at a constant current of 0.7 C until the voltage reaches 3.0 V, thereby completing one charge-and-discharge cycle; recording a thickness of the lithium-ion battery in a fully charged state at the end of the first cycle; and then performing 800 charge-and-discharge cycles repeatedly according to the foregoing method, and recording a thickness of the lithium-ion battery in the fully charged state at the end of each cycle.

Testing the lithium-ion batteries in groups, with each group containing 4 batteries. Calculating an average of the cycle thickness expansion rates of the lithium-ion batteries. Cycle thickness expansion rate of a lithium-ion battery = (thickness of the 800^{th}-cycle lithium-ion battery/thickness of a chemically formed lithium-ion battery - 1) × 100%.

### 1.5 Testing the cycle performance:

Charging a lithium-ion battery at a constant current of 0.5 C in a 25 °C±2 °C thermostat until the voltage reaches 4.45 V, charging the battery at a constant voltage of 4.45 V until the current reaches 0.05 C, and leaving the battery to stand for 15 minutes; discharging the battery at a constant current of 0.5 C until the voltage reaches 3.0 V, and leaving the battery to stand for 5 minutes, thereby completing one charge-and-discharge cycle. Repeating the charge-and-discharge cycle of the battery with a first-cycle discharge capacity of 100%, and stopping the test when the discharge capacity attenuates to 80%. Recording the number of cycles as an indicator of the cycle performance of the lithium-ion battery.

### II. Preparation methods

### 2.1 Preparing a positive electrode

Dissolving lithium cobalt oxide, conductive carbon black, and polyvinylidene difluoride (PVDF) in an N-methylpyrrolidone solution at a weight ratio of 97: 1.4: 1.6 to form a positive slurry. Using an aluminum foil as a positive current collector, coating the positive electrode slurry onto the positive current collector, and performing steps of drying, cold pressing, and cutting to obtain a positive electrode.

### 2.2 Preparing a negative electrode

Dissolving a silicon-carbon composite, styrene butadiene rubber, and sodium carboxymethyl cellulose at a weight ratio of 97.7: 1.0: 1.3 in deionized water to form a negative slurry, in which the weight percent of silicon is 10%. Using a copper foil as a negative current collector, coating the negative electrode slurry onto the negative current collector; and performing steps of drying, cold pressing, and cutting to obtain a negative electrode.

### 2.3 Preparing an electrolytic solution

Mixing lithium hexafluorophosphate with a nonaqueous organic solvent at a weight ratio of 8: 92 in an environment with a moisture content of less than 10 ppm to prepare an electrolytic solution, where the nonaqueous organic solvent is a mixture of ethylene carbonate (EC): diethyl carbonate (DEC): propylene carbonate (PC): propyl propionate (PP): vinylene carbonate (VC) mixed at a weight ratio of 20: 30: 20: 28: 2.

### Comparative Embodiment 1

Mixing polyvinylidene difluoride powder, dodecyl dimethylamine (an emulsifier), and water at a weight ratio of 9.5: 0.5: 90 at a normal temperature, and stirring for 1 hour, and then leaving the mixture to stand for 3 hours to obtain a polyvinylidene difluoride aqueous emulsion. Mixing the polyvinylidene difluoride aqueous emulsion with dimethylacetamide at a weight ratio of 2: 1 to form an adhesive layer slurry. Using polyethylene as a separator, applying the adhesive layer slurry onto both sides of the separator, and drying to obtain an adhesive layer and a separator, where the thickness of the adhesive layer on a single side is 2.0 µm and the thickness of the separator is 5.0 µm.

Subsequently, stacking the positive electrode, the separator, the adhesive layer, and the negative electrode in sequence, placing the separator between the positive electrode and the negative electrode to serve a separation function, placing the adhesive layer between the separator and the negative electrode to serve an adhesion function, and then winding them into an electrode assembly. Subsequently, putting the electrode assembly into an aluminum plastic film packaging bag. Subsequently, injecting the electrolytic solution into the dry electrode assembly, and performing steps such as vacuum packaging, standing, formation, and shaping to complete preparing the lithium-ion battery.

### Comparative Embodiment 2

The preparation method is the same as that in Comparative Embodiment 1 except that Comparative Embodiment 2 uses a bare separator made of polyethylene (without an adhesive layer).

### Embodiment 1

The preparation method is the same as that in Comparative Embodiment 1 except: in Embodiment 1, the negative electrode is further subjected to a lithium supplement process: a layer of lithium metal foil is disposed on the surface of the negative active material layer of the negative electrode to form a 0.04 µm-thick lithium compound layer, in which the fraction of coverage of the lithium compound layer on the negative active material layer is 80%. Subsequently, the positive electrode, the separator, the adhesive layer, and the negative electrode are arranged in sequence, and assembled to obtain a lithium-ion battery.

### Embodiments 2 to 6

The preparation method is the same as that in Embodiment 1 except: in Embodiments 2 to 6, the polyvinylidene difluoride aqueous emulsion is replaced by a polymer aqueous emulsion formed by a polymer (modified polypropylene polymer) made from spherical particles; of the polymer, the monomer of the main chain is propylene, the substituent is carboxyl, the degree of substitution is 0.65, the molecular weight is 30000, and the particle size is 1.1 µm; and the thickness of the adhesive layer is changed, as detailed in Table 1.

### Embodiments 7 to 12

The preparation method is the same as that in Embodiment 4 except: in Embodiments 7 to 12, the thickness of the lithium compound layer is changed, as detailed in Table 1.

### Embodiments 13 to 18

The preparation method is the same as that in Embodiment 4 except: in Embodiments 13 to 18, the surface roughness of the negative electrode is changed, as detailed in Table 1.

### Embodiments 19 to 21

The preparation method is the same as that in Embodiment 4 except: in Embodiments 19 to 21, the fraction of coverage of the lithium compound layer is changed, as detailed in Table 1.

### Embodiments 22 to 26

The preparation method is the same as that in Embodiment 4 except: in Embodiments 22 to 26, the porosity of the negative active material layer and the lithium compound layer is changed, as detailed in Table 1.

The thickness, width, length, and weight of fresh lithium-ion batteries in the foregoing embodiments and comparative embodiments are measured. Subsequently, a part of the fresh lithium-ion batteries are disassembled to measure the surface roughness and thickness of the lithium compound layer of the batteries. The remaining part of the lithium-ion batteries are subjected to a capacity test, an adhesive force test, a cycle thickness expansion rate test, and a cycle performance test, and the test results are recorded.

Table 1 shows statistical values of the negative electrodes and the functional layers of the negative electrode described in Embodiments 1 to 26 and Comparative Embodiments 1 to 2.

**Table 1**

| Embodiment/ Comparative Embodiment | Material of adhesive layer | Surface roughness of negative electrode (µm) | Fraction of coverage of lithium compound layer | Porosity of negative active material layer and lithium compound layer | Subjected to lithium supplement process? | Thickness of lithium compound layer (µm) | Thickness of adhesive layer (µm) |
|---|---|---|---|---|---|---|---|
| Comparative Embodiment 1 | Polyvinylidene difluoride | 3.1 | / | / | No | / | 2.0 |
| Comparative Embodiment 2 | / | 3.1 | / | / | No | 0.04 | / |
| Embodiment 1 | Polyvinylidene difluoride | 3.0 | 80% | 30% | Yes | 0.04 | 2.0 |
| Embodiment 2 | Modified polypropylene polymer | 3.0 | 80% | 30% | Yes | 0.04 | 0.1 |
| Embodiment 3 | Modified polypropylene polymer | 3.0 | 80% | 30% | Yes | 0.04 | 1.0 |
| Embodiment 4 | Modified polypropylene polymer | 3.0 | 80% | 30% | Yes | 0.04 | 2.0 |
| Embodiment 5 | Modified polypropylene polymer | 3.0 | 80% | 30% | Yes | 0.04 | 5.0 |
| Embodiment 6 | Modified polypropylene polymer | 3.0 | 80% | 30% | Yes | 0.04 | 10.0 |
| Embodiment 7 | Modified polypropylene polymer | 3.0 | 80% | 30% | Yes | 0.005 | 2.0 |
| Embodiment 8 | Modified polypropylene polymer | 3.0 | 80% | 30% | Yes | 0.01 | 2.0 |
| Embodiment 9 | Modified polypropylene polymer | 3.0 | 80% | 30% | Yes | 0.1 | 2.0 |
| Embodiment 10 | Modified polypropylene polymer | 3.0 | 80% | 30% | Yes | 1.02 | 2.0 |
| Embodiment 11 | Modified polypropylene polymer | 3.0 | 80% | 30% | Yes | 3.0 | 2.0 |
| Embodiment 12 | Modified polypropylene polymer | 3.0 | 80% | 30% | Yes | 4.0 | 2.0 |
| Embodiment 13 | Modified polypropylene polymer | 0.2 | 80% | 30% | Yes | 0.04 | 2.0 |
| Embodiment 14 | Modified polypropylene polymer | 0.5 | 80% | 30% | Yes | 0.04 | 2.0 |
| Embodiment 15 | Modified polypropylene polymer | 1.1 | 80% | 30% | Yes | 0.04 | 2.0 |
| Embodiment 16 | Modified polypropylene polymer | 2.3 | 80% | 30% | Yes | 0.04 | 2.0 |
| Embodiment 17 | Modified polypropylene polymer | 4.0 | 80% | 30% | Yes | 0.04 | 2.0 |
| Embodiment 18 | Modified polypropylene polymer | 5.0 | 80% | 30% | Yes | 0.04 | 2.0 |
| Embodiment 19 | Modified polypropylene polymer | 3.0 | 20% | 30% | Yes | 0.04 | 2.0 |
| Embodiment 20 | Modified polypropylene polymer | 3.0 | 30% | 30% | Yes | 0.04 | 2.0 |
| Embodiment 21 | Modified polypropylene polymer | 3.0 | 50% | 30% | Yes | 0.04 | 2.0 |
| Embodiment 22 | Modified polypropylene polymer | 3.0 | 80% | 5% | Yes | 0.04 | 2.0 |
| Embodiment 23 | Modified polypropylene polymer | 3.0 | 80% | 10% | Yes | 0.04 | 2.0 |
| Embodiment 24 | Modified polypropylene polymer | 3.0 | 80% | 40% | Yes | 0.04 | 2.0 |
| Embodiment 25 | Modified polypropylene polymer | 3.0 | 80% | 60% | Yes | 0.04 | 2.0 |
| Embodiment 26 | Modified polypropylene polymer | 3.0 | 80% | 70% | Yes | 0.04 | 2.0 |

Table 2 shows test results of the adhesive force test, capacity test, and cycle thickness expansion rate test of the lithium-ion batteries described in Embodiments 1 to 21 and Comparative Embodiments 1 and 2.

**Table 2**

| Embodiment/ Comparative Embodiment | Adhesive force of adhesive layer (N/m) | Volumetric energy density (wh/L) | Cycle thickness expansion rate |
|---|---|---|---|
| Comparative Embodiment 1 | 10.0 | 698.2 | 8.0% |
| Comparative Embodiment 2 | 0 | 713.3 | 11.1% |
| Embodiment 1 | 0.4 | 778.2 | 16.2% |
| Embodiment 2 | 5.6 | 806.5 | 7.8% |
| Embodiment 3 | 11.2 | 803.5 | 6.6% |
| Embodiment 4 | 16.1 | 792.9 | 5.5% |
| Embodiment 5 | 21.3 | 771.1 | 4.6% |
| Embodiment 6 | 23.1 | 740.5 | 3.9% |
| Embodiment 7 | 18.3 | 731.1 | 5.1% |
| Embodiment 8 | 16.7 | 761.9 | 5.4% |
| Embodiment 9 | 15.1 | 799.8 | 5.9% |
| Embodiment 10 | 13.8 | 805.9 | 6.3% |
| Embodiment 11 | 11.2 | 819.7 | 7.8% |
| Embodiment 12 | 5.1 | 837.6 | 10.5% |
| Embodiment 13 | 6.2 | 792.7 | 8.7% |
| Embodiment 14 | 10.2 | 792.5 | 7.3% |
| Embodiment 15 | 13.7 | 793.2 | 6.5% |
| Embodiment 16 | 16.1 | 792.7 | 5.9% |
| Embodiment 17 | 17.8 | 792.6 | 5.5% |
| Embodiment 18 | 18.1 | 792.2 | 5.5% |
| Embodiment 19 | 9.5 | 785.2 | 8.3% |
| Embodiment 20 | 12.7 | 790.2 | 5.5% |
| Embodiment 21 | 15.3 | 792.5 | 5.3% |

Table 3 shows test results of the adhesive force test, capacity test, cycle thickness expansion rate test, and cycle performance test of the lithium-ion batteries described in Embodiments 22 to 26 and Comparative Embodiments 1 and 2.

**Table 3**

| Embodiment/ Comparative Embodiment | Adhesive force of adhesive layer (N/m) | Volumetric energy density (wh/L) | Cycle thickness expansion rate | Number of cycles when capacity attenuates to 80% |
|---|---|---|---|---|
| Comparative Embodiment 1 | 10.0 | 698.2 | 8.0% | 653 |
| Comparative Embodiment 2 | 0 | 713.3 | 11.1% | 301 |
| Embodiment 22 | 15.8 | 792.8 | 5.9% | 672 |
| Embodiment 23 | 16.4 | 793.5 | 5.5% | 706 |
| Embodiment 24 | 16.0 | 792.3 | 5.4% | 721 |
| Embodiment 25 | 16.3 | 792.7 | 5.5% | 753 |
| Embodiment 26 | 16.1 | 793.7 | 5.5% | 755 |

As shown in Tables 1 to 3, in the lithium-ion batteries subjected to the lithium supplement process in the embodiments of this application, an adhesive layer containing the polymer specified in this application is disposed, and can effectively increase the adhesive force of the adhesive layer to the lithium compound layer, thereby reducing the cycle thickness expansion rate of the lithium-ion batteries while maintaining a given volumetric energy density. As can be seen from Embodiments 1 and 4 versus Comparative Embodiments 1 and 2, in comparison with the absence of the adhesive layer or the practice of using the conventional polyvinylidene difluoride as the adhesive layer, the polymer of the adhesive layer in Embodiment 4 of this application is a modified polypropylene polymer, and can effectively increase the adhesive force between the separator and the negative electrode subjected to the lithium supplement process. In addition, the lithium-ion battery subjected to the lithium supplement process achieves a higher volumetric energy density, thereby improving the cycle performance, electrochemical performance, and safety performance of the electrochemical devices described in Embodiments 2 to 26.

As can be seen from comparison between Embodiments 2 to 6, the greater the thickness of the adhesive layer of the lithium-ion battery, the higher the adhesive force of the adhesive layer to the lithium metal layer and the separator. However, the higher thickness of the adhesive layer further reduces the volumetric energy density of the lithium-ion battery. As can be seen from comparison between Embodiments 4 and 7 to 12, the greater the thickness of the lithium compound layer of the lithium-ion battery, the higher the volumetric energy density of the lithium-ion battery. However, the greater thickness of the lithium compound layer further reduces the adhesive force of the adhesive layer to the lithium compound layer. The lithium-ion batteries within the scope of the embodiments of this application can maintain a relatively low cycle thickness expansion rate while maintaining a relatively high volumetric energy density.

As can be seen from comparison between Embodiments 4 and Embodiments 13 to 18, a higher surface roughness of the negative electrode of the lithium-ion battery increases the adhesive force of the adhesive layer, and reduces the cycle thickness expansion rate. However, as shown in Table 2, when the surface roughness of the negative electrode exceeds 3 µm, the decrease of the cycle thickness expansion rate of the lithium-ion battery is not evident. In addition, excessive roughness can further impair the bonding between the negative electrode and the separator, and increase the risks of impairing the safety performance of the lithium-ion battery.

As can be seen from comparison between Embodiment 4 and Embodiments 19 to 21, the higher the fraction of coverage of the lithium compound layer on the negative active material layer, the greater the adhesive force of the adhesive layer of the lithium-ion battery.

As can be seen from comparison between Embodiment 4 and Embodiments 22 to 26, as shown in Table 3, the increased porosity of the negative active material layer and the lithium compound layer can improve the cycle performance of the lithium-ion battery. However, when the porosity of the negative active material layer and the lithium compound layer exceeds 60%, the improvement of the cycle performance of the lithium-ion battery is not evident. In addition, an excessive porosity may impair the structural stability of the lithium-ion battery.

Through the comparison between the foregoing embodiments, it can be clearly understood that, after undergoing a lithium supplement process, the electrochemical device according to this application can effectively improve the energy density, and form a lithium compound layer on the negative electrode. The adhesive layer disposed between the lithium compound layer and the separator increases the adhesive force between the negative electrode and the separator, thereby reducing the cycle thickness expansion rate and deformation of the electrochemical device while maintaining a high energy density. In addition, by defining the polymer of the adhesive layer, this application can further ensure an appropriate adhesive force of the adhesive layer between the negative electrode and the separator, thereby improving the safety performance and cycle performance of the electrochemical device significantly.

References to "embodiments", "some embodiments", "an embodiment", "another example", "example", "specific example" or "some examples" throughout the specification mean that at least one embodiment or example in this application includes specific features, structures, materials, or characteristics described in the embodiment(s) or example(s). Therefore, descriptions throughout the specification, which make references by using expressions such as "in some embodiments", "in an embodiment", "in one embodiment", "in another example", "in an example", "in a specific example", or "example", do not necessarily refer to the same embodiment or example in this application. In addition, specific features, structures, materials, or characteristics herein may be combined in one or more embodiments or examples in any appropriate manner.

Although illustrative embodiments have been demonstrated and described above, a person skilled in the art understands that the above embodiments are not to be construed as a limitation on this application, and changes, replacements, and modifications may be made to the embodiments without departing from the spirit, principles, and scope of this application.

## Claims

1. An electrochemical device, comprising:
a positive electrode;
a negative electrode, comprising a negative active material layer;
a separator, wherein the separator is disposed between the positive electrode and the negative electrode;
an adhesive layer disposed between the negative active material layer and the separator; and
a lithium compound layer, wherein the lithium compound layer is disposed between the adhesive layer and the negative active material layer, and the lithium compound layer comprises at least one of lithium carbonate or lithium oxide.

2. The electrochemical device according to claim 1, wherein the adhesive layer comprises a polymer, the polymer comprises a main chain and a substituent, the main chain is formed of at least one monomer selected from the group consisting of methyl propylene, methacrylic acid, methyl methacrylate, imide, vinyl alcohol, and ethylene glycol; and the substituent comprises at least one selected from the group consisting of carboxyl, hydroxyl, amino, amido, methoxy, cyano, and ester group.

3. The electrochemical device according to claim 2, wherein the polymer is embodied as particles, and a particle size of the polymer is 0.01 µm to 20 µm.

4. The electrochemical device according to claim 1, wherein a thickness of the lithium compound layer is 0.01 µm to 3 µm, a thickness of the adhesive layer is 0.1 µm to 10 µm, and a surface roughness of the negative electrode is 0.5 µm to 4.0 µm.

5. The electrochemical device according to claim 1, wherein the lithium compound layer is in contact with the negative active material layer, and the lithium compound layer is in contact with the adhesive layer.

6. The electrochemical device according to claim 1, wherein more than 30% of the negative active material layer is covered by the lithium compound layer.

7. The electrochemical device according to any one of claims 1 to 6, wherein a porosity of the negative active material layer and the lithium compound layer is 10% to 60%.

8. The electrochemical device according to claim 1, wherein the negative active material layer comprises a negative active material, and the negative active material comprises at least one of artificial graphite, natural graphite, mesocarbon microbead, hard carbon, soft carbon, lithium titanium oxide, single crystal silicon, amorphous silicon, silicon-oxygen composite, or silicon-carbon composite.

9. The electrochemical device according to claim 8, wherein the negative active material layer further comprises at least one of a binder or a conductive agent, the binder comprises at least one of polyvinylidene difluoride, poly(vinylidene difluoride-co-hexafluoropropylene), polyamide, polyacrylonitrile, polyacrylate, polyacrylic acid, polyacrylic acid sodium salt, sodium carboxymethyl cellulose, polyvinylpyrrolidone, polyvinyl ether, polymethyl methacrylate, polytetrafluoroethylene, polyhexafluoropropylene, or styrene butadiene rubber, and the conductive agent comprises at least one of carbon nanotubes, carbon fibers, conductive carbon black, acetylene black, graphene, or Ketjen black.

10. The electrochemical device according to claim 9, wherein the lithium compound layer comprises neither the binder nor the conductive agent.

11. An electronic device, comprising the electrochemical device according to any one of claims 1 to 10.
